# EUROPEAN PATENT APPLICATION

(11) **EP 4 421 911 A1**
(43) Date of publication of application: **28.08.2024**
(21) Application number: 22897666.8
(22) Date of filing: 16.11.2022
(51) Int. Cl.: H01M 4/485

(54) **BATTERY NEGATIVE ELECTRODE ACTIVE MATERIAL AND PREPARATION METHOD THEREFOR, BATTERY NEGATIVE ELECTRODE, AND SECONDARY BATTERY**

(30) Priority: 26.11.2021 CN 202111421320
(71) Applicant: Berzelius (Nanjing) Co., Ltd., Jiangsu 210006 (CN); Berzelius (Hefei) Co., Ltd., Hefei, Anhui 231582 (CN)
(72) Inventor: LUO, Shu, Nanjing Jiangsu 210006 (CN); ZHANG, Hebao, Nanjing Jiangsu 210006 (CN); ZHA, Daosong, Nanjing Jiangsu 210006 (CN); LIAN, Yunyun, Nanjing Jiangsu 210006 (CN); LI, Zhe, Nanjing Jiangsu 210006 (CN); WANG, Cen, Nanjing Jiangsu 210006 (CN)
(74) Representative: Kurig, Thomas
(86) International application number: PCT/CN2022/132164
(87) International publication number: WO 2023/093583

(57) **Abstract**

The present application provides an anode active material for a battery and a preparation method thereof, a battery anode and a secondary battery. The anode active material for a battery comprises anode active substance particles, wherein the anode active substance particles comprise silicon oxide compounds and lithium; in the X-ray diffraction using Cu-K_{α} radiation, the anode active substance particles have a first diffraction peak in a range of 2θ=18.78°±0.2° and a second diffraction peak in a range of 2θ=47.4°±0.3°; and a full width at half maximum of the first diffraction peak is set as A, A is greater than 0.34°, a full width at half maximum of the second diffraction peak is set as B, and B/A≥1.3. The anode active material for a battery provided by this application has superior electrochemical properties, including high energy density and excellent kinetic performance when employed in batteries. Batteries utilizing this anode active material demonstrate significant advantages such as high energy density and exceptional rate discharge and fast charge performance.

## Description

### Technical Field

The application relates to the field of batteries, in particular to an anode active material for a battery and a preparation method thereof, a battery anode and a secondary battery.

### Background

In recent years, with the continuous development of various portable electronic devices and electric vehicles, there is an increasing demand for batteries with high energy density and long cycle life. Currently, anode active materials used in commercial lithium-ion batteries are mainly graphite, but its low theoretical capacity (372 mAh/g) limits the further improvement of battery energy density. In contrast, monatomic silicon anode active material has an advantage of a high capacity (the state with lithium intercalation at indoor temperature is Li₁₅Si₄, and the theoretical lithium storage capacity is about 3600mAh/g), which is about ten times the theoretical capacity of the existing commercial graphite anode active material, and having a high-capacity advantage that cannot be surpassed by other anode active materials, thus having become a hotspot in research and development in recent years, and has gradually moved from the research and development in laboratories to commercial applications.).

At present, three types of silicon anode active materials are mainly studied and developed: composite material of monatomic silicon (including nano-silicon, porous silicon, amorphous silicon, and the like) and carbon material thereof; alloy material formed by compounding silicon with other metals (such as ferrum, manganese, nickel, chromium, cadmium, tin and copper) or non-metals (such as carbon, nitrogen, phosphorus and boron); composite material of silicon oxide and carbon material thereof. In these three structures, the monatomic silicon material has the highest theoretical capacity, thus also having the highest theoretical energy density. However, the monatomic silicon anode active material has a serious volume effect in the lithiation and delithiation process, and the rate of volume change is about 300%, which may lead to pulverization of the electrode material and separation of the electrode material from the current collector. In addition, the silicon anode active material may fracture ceaselessly due to continuous expansion and contraction in the battery charging and discharging process, and new interface generated in this process will be exposed to the electrolyte to form a new SEI film, so that the electrolyte will be continuously consumed, thus reducing the cycle performance of the battery. These defects severely limit the commercial application of monatomic silicon anodes.

The silicon oxide compounds contain many inactive substances, thus having a capacity lower than that of the monatomic silicon anode active material. However, due to the existence of these inactive substances, the expansion of silicon in the cycle process is effectively restrained by the inactive phase, so the silicon oxide compounds have an outstanding advantage in cycle stability.

The silicon oxide compounds also have some specific problems. When lithium is initially intercalated into the material, too many side reactions occur between the surface of the particles and the electrolyte, and a thick SEI film is generated; moreover, substances that are irreversible to release lithium ions, such as lithium metasilicate and lithium oxide, are generated in the particles, thus resulting in irreversible losses of lithium ions in batteries. These two irreversible reactions reduce the initial coulombic efficiency of lithium ion batteries containing silicon oxide compound anodes, thus limiting the improvement of the energy density of the batteries. In addition, the silicon oxide compounds also have the problems of low ionic and electronic conductivity, low coulombic efficiency during the cycle process, and the like. In view of these problems, researchers make the following improvements.

Specifically, in order to improve the electrical conductivity of the silicon oxide compounds to obtain a high capacity and a better cycle performance, the surface of the silicon oxide compounds may be coated with a conductive material such as a carbon film. In order to improve the initial coulombic efficiency, lithium may be doped into the silicon oxide compounds, for example, the silicon oxide compounds and lithium are mixed at a high temperature, or lithium is doped into silicon oxide compound anodes by an electrochemical method, or the silicon oxide compounds and lithium or an organic lithium compound, serving as a lithiation agent, are subjected to an in-situ reaction when mixed by means of high-energy mechanical mixing, or a lithium-containing compound and the silicon oxide compounds are subjected to a reaction at a high temperature to dope lithium into the silicon oxide compounds. The microstructure and crystalline phase composition of silicon oxide compounds significantly affect their electrochemical performance. To obtain improved cycle performance, efforts have been focused on reducing the size of silicon microcrystals within the silicon oxide compounds. However, improving the kinetic performance of silicon oxide compounds to achieve superior rate discharge and fast charge performance for secondary batteries using these anodes remains a challenge.

The content in the background art is only the technology known to the applicants, and does not represent the prior art in this field.

### Summary

In view of the defects of the prior art, the present application provides an anode active material for a battery. The anode active material for a battery comprises anode active substance particles, wherein the anode active substance particles comprise silicon oxide compounds and lithium;

in an X-ray diffraction using Cu-K_{α} radiation, the anode active substance particles have a first diffraction peak in a range of 2θ=18.78°±0.2° and a second diffraction peak in a range of 2θ=47.4°±0.3°; and

a full width at half maximum of the first diffraction peak is set as A, A is greater than 0.34°, a full width at half maximum of the second diffraction peak is set as B, and B/A>1.3.

In some embodiments of the present application, 0.43°≤A≤3° and 1.5≤B/A≤20; preferably 0.55°≤A≤2° and 1.8≤B/A≤15.

In some embodiments of the present application, a peak area of the first diffraction peak is set as C, a sum of peak areas of all diffraction peaks of the anode active substance particles in a range of 2θ=10 °-60 ° in the X-ray diffraction using Cu-K_{α} radiation is set as D, and C/D is≥0.03; preferably, 0.05≤C/D≤0.2.

In some embodiments of the present application, in the X-ray diffraction using Cu-K_{α} radiation, the anode active substance particles have a third diffraction peak in a range of 2θ=22°-23°, a peak area of the third diffraction peak is set as E, and E/D≤0.02.

In some embodiments of the present application, the anode active substance particles have a fourth diffraction peak in a range of 2θ=23.4°-25.2° in the X-ray diffraction using Cu-K_{α} radiation, a peak area of the fourth diffraction peak is set as F, and F/C≤6; preferably, F/C≤3; more preferably, F/C≤1.

In some embodiments of the present application, the anode active substance particles further comprise nano-silicon grains, and a median particle size of the nano-silicon grains dispersed in the anode active substance particles is 0.1-35 nm, preferably 0.5-20 nm, and more preferably 1-15 nm.

In some embodiments of the present application, content of silicon in the anode active substance particles is 30-80wt%, preferably 35-65wt%, and more preferably 40-65wt%.

In some embodiments of the present application, the anode active substance particles further comprise a surface-located carbon film layer.

In some embodiments of the present application, a thickness of the carbon film layer is 0.001-5 µm, preferably 0.005-2 µm, and more preferably 0.01-1 µm.

In some embodiments of the present application, a mass of the carbon film layer accounts for 0.01-20wt%, preferably 0.1-15wt%, and more preferably 1-12wt% of a total mass of the anode active substance particles.

The present application further provides a method of preparing an anode active material for a battery, comprising:
preparing anode active substance particles, which comprises:
preparing silicon oxide compound particles; and
intercalating lithium into the silicon oxide compound particles;
wherein in an X-ray diffraction using Cu-K_{α} radiation, the anode active substance particles have a first diffraction peak in a range of 2θ=18.78°±0.2° and a second diffraction peak in a range of 2θ=47.4°±0.3°; and
a full width at half maximum of the first diffraction peak is set as A, A is greater than 0.34°, a full width at half maximum of the second diffraction peak is set as B, and B/A>1.3.

In some embodiments of the present application, preparing the anode active substance particles further comprises performing partial or complete carbon coating on surfaces of the silicon oxide compound particles.

In some embodiments of the present application, lithium is intercalated in the silicon oxide compound particles after the surfaces of the silicon oxide compound particles are partially or completely coated with carbon.

The present application further provides a battery anode, comprising:
the anode active material for a battery as described above; or
an anode active material for a battery prepared by the method as described above.

The present application further provides a secondary battery, comprising the battery anode as described above.

The anode active material for a battery provided by this application has superior electrochemical properties, including high energy density and excellent kinetic performance when employed in batteries. Batteries utilizing this anode active material demonstrate significant advantages such as high energy density and exceptional rate discharge and fast charge performance.

Additional aspects and advantages of the present application will be partially provided in the following description, partially becoming apparent from the description below, or understood through the practice of the present application.

### Brief Description of the Drawings

Fig. 1 is a flowchart of a preparation process of an anode active material according to an exemplary embodiment of the application.
Fig. 2 is a flowchart of a preparation process of an anode active material according to another exemplary embodiment of the application.
Fig. 3 is a diagram of full width at half maximum obtained by XRD pattern fitting.
Fig. 4 is an XRD pattern of an anode active material prepared according to an exemplary embodiment of the application.
Fig. 5 is an SEM image of an anode active material prepared according to an exemplary embodiment of the application, with a magnification factor of 10,000.

### Detailed Description of Embodiments

For the sake of a better understanding of the solutions and advantages of the present application, specific implementations of the present application will be explained in further detail below in conjunction with embodiments. Clearly, the specific implementations and embodiments below are merely for the purpose of description and are not used to limit the present application..

It is particularly important to point out that all similar substitutions and modifications are obvious to those skilled in the art, and they are all considered to be included in the present application. The method and application of the present application have been described through preferred embodiments, and relevant personnel can obviously modify or appropriately change and combine the method and application described herein without departing from the content, spirit and scope of the present application, so as to realize and apply the technology of the present application.

### [Anode active material]

The present application provides an anode active material for a battery, comprising anode active substance particles, wherein the anode active substance particles comprise silicon oxide compounds and lithium. In the present application, the silicon oxide compounds are preferably in the form of particles.

In the X-ray diffraction using Cu-K_{α} radiation, the anode active substance particles have a first diffraction peak in the range of 2θ=18.78°±0.2°, and the diffraction peak is that of a Li2SiO₃ phase. In the present application, a full width at half maximum (FWHM) of the first diffraction peak is set as A, and A is greater than 0.34°.

Further, in the X-ray diffraction using Cu-K_{α} radiation, the anode active substance particles have a second diffraction peak in the range of 2θ=47.4°±0.3°, and the diffraction peak is that of a Si(220) crystal plane. In the present application, a full width at half maximum of the second diffraction peak is set as B, and B/A≥1.3.

Further, the value of A can satisfy 0.43°≤A≤3°. Still further, the value of A can satisfy 0.55°≤A≤2°.

Further, the value of B/A can satisfy 1.5<B/A<20. Still further, the value of B/A can satisfy 1.8<B/A<15.

In the present application, the full widths at half maximum of the diffraction peaks of the Li₂SiO₃ phase and the Si(220) crystal plane are set within the above ranges, in order to obtain an anode active material with appropriate grain size, relatively uniform crystal domain structure inside particles and good processability. In the present application, when the full widths at half maximum of the diffraction peaks of the Li₂SiO₃ phase and the Si phase (i.e., the larger the value of A and the value of B) are larger, that means the Li2SiO₃ phase and the Si phase are closer to an amorphous structure, comprising smaller grain size and less hindrance to solid-phase lithium ion migration within the particles, resulting in better kinetic performance. However, the amorphous Li2SiO₃ phase has poor stability and is susceptible to side reactions with water and air, forming highly alkaline lithium-containing compounds that negatively impact the electrochemical properties of materials. Therefore, the value of A defined by the present application is preferably within the range of 0.43°≤A≤3°, and more preferably within the range of 0.55° ≤A≤2°.

Further, the Li₂SiO₃ phase and the Si phase are dispersed in a mutually interpenetrating manner. When the ratio between the grain sizes of the Li₂SiO₃ phase and the Si phase is preferably within a suitable range, the particles can have a suitable grain size, and at the same time, the internal micro-domain structure is relatively uniform. When cycled lithiation and delithiation occur within the Si phase with repeated expansion and contraction, the structure of the present application contributes to the uniform stress release within the micro-domain of the particles, reducing particle fracturing caused by uneven stress distribution and thereby minimizing irreversible capacity loss. By controlling the values of A and B/A within the specified ranges, the present application enables the development of an anode active material with excellent kinetic performance, uniform internal crystal domain structure, and high reversible capacity.

In some embodiments of the present application, a peak area of the first diffraction peak is set as C, the sum of peak areas of all diffraction peaks of the anode active substance particles in the range of 2θ=10°-60° is set as D (with the linear background area between 2θ=10° and 60° subtracted), and C/D≥0.03. Further, the value of C/D can satisfy 0.05≤C/D ≤0.2.

In some embodiments of the present application, in the X-ray diffraction using Cu-K, radiation, the anode active substance particles have a third diffraction peak in the range of 2θ=22°-23°, the third diffraction peak is that of Li₄SiO₄, a peak area of the third diffraction peak is set as E, and E/D≤0.02.

Further, in the X-ray diffraction using Cu-K_{α} radiation, the anode active substance particles have a fourth diffraction peak in the range of 2θ=23.4°-25.2°, and the fourth diffraction peak is that of Li₂Si₂O₅. A peak area of the diffraction peak of Li₂Si₂O₅ is F, and F/C≤6.

Further, the value of F/C can satisfy F/C≤3. Still further, the value of F/C can satisfy F/C≤1.

The present application preferably imposes certain restrictions on the proportions of Li₂SiO₃, Li₄SiO₄ and Li₂Si₂O₅ phases in the anode active substance particles. It is preferable to have Li2SiO₃ and Li₂Si₂O₅ as the main phases, avoiding excessive proportions of the Li₄SiO₄ phase. This is because a high proportion of Li₄SiO₄ phase tends to enhance the crystallinity of Si and leads to an uneven internal micro-domain structure. When the proportions of Li2SiO₃, Li₄SiO₄ and Li₂Si₂O₅ phases are controlled within the above ranges, it enables the development of an anode active material with excellent kinetic performance, uniform internal crystal domain structure, and high reversible capacity.

In some embodiments of the present application, a median particle size of the silicon oxide compound particles may be 0.2-20 µm, preferably 1-15 µm, and more preferably 3-13 µm.

In some embodiments of the present application, the silicon oxide compound particles further contain nano-silicon grains which can be uniformly dispersed in the anode active substance particles. The nano-silicon grains can exist in the form of nano-particles in the silicon oxide compound particles, with a median particle size of 0.1-35 nm, preferably 0.5-20 nm, and more preferably 1-15 nm. Particles within this size range exhibit minimal expansion and are resistant to fracturing during the cyclic process of lithium ion intercalation and deintercalation. As a result, lithium-ion secondary batteries employing this material demonstrate low cycling expansion and enhanced cycling stability.

In some embodiments of the present application, the content of silicon in the anode active substance particles may be 30-80wt%, preferably 35-65wt%, and more preferably 40-65wt%, thus making the material have a high reversible capacity.

In some embodiments of the present application, surfaces of the anode active substance particles are also coated with a carbon film layer. The carbon film layer partially or completely covers the surfaces of the silicon oxide compounds. A thickness of the carbon film layer may be 0.001-5 µm, preferably 0.005-2 µm, and more preferably 0.01-1 µm. The carbon film layer can effectively improve the conductivity of the particles, and reduce the contact resistance between particles in a negative electrode plate and between the negative electrode plate and a current collector, thus improving the efficiency of lithiation and delithiation of the materials, reducing the polarization of lithium-ion batteries and promoting their cycling stability.

In some embodiments of the present application, the mass of the carbon film layer may account for 0.01-20wt%, preferably 0.1-15wt%, and more preferably 1-12wt% of the total mass of the anode active substance particles.

The anode active material for a battery provided by the present application has superior electrochemical properties, including high energy density and excellent kinetic performance when employed in batteries. Batteries utilizing this anode active material demonstrate significant advantages such as high energy density, exceptional rate discharge and fast charge performance.

### [Preparation method of anode active material]

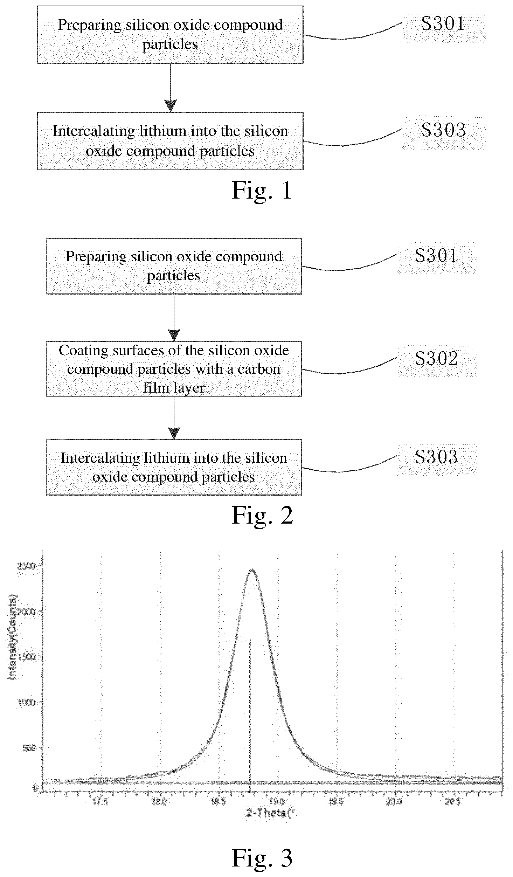

Fig. 1 is a flowchart of a preparation process of the above anode active material according to an exemplary embodiment of the application.

According to some embodiments, in Step S301, silicon oxide compound particles are prepared. The specific process of preparation can be carried out according to the following steps.

First, a mixture of metal silicon powder and silicon dioxide powder is heated in the temperature range of 900-1600°C in an inert gas atmosphere or under reduced pressure, generating silicon oxide gas. The molar ratio of metal silicon powder to silicon dioxide powder can be set within the range of 0.5-1.5. Gas produced by the heating reaction of the raw materials deposits on an adsorption plate. A deposited material is then removed when the temperature inside a reacting furnace drops below 100°C, and crushed and pulverized using equipment such as a ball mill and a jet mill, resulting in silicon oxide compound particles for further use.

Then, proceed to Step S303, where lithium is intercalated into the silicon oxide compound particles.

The present application can adopt the following lithium intercalation methods (lithium doping modification methods).

### (1) Electrochemical method

An electrochemical cell is provided, which comprises a bath, an anode electrode, a cathode electrode and a power supply, wherein the anode electrode and the cathode electrode are respectively connected with two ends of the power supply; the anode electrode is connected to a lithium source, and the cathode electrode is connected to a container containing the silicon oxide compound particles; and the bath is filled with an organic solvent, so that the lithium source (anode electrode) and the container (cathode electrode) containing the silicon oxide compound particles are immersed in the organic solvent. After the power supply is turned on, due to the electrochemical reaction, lithium ions are intercalated into the silicon oxide compound structure, resulting in lithium-doped modified silicon oxide compound particles. The organic solvent may be ethylene carbonate, propylene carbonate, butylene carbonate, fluoroethylene carbonate, dimethyl carbonate, methyl ethyl carbonate, diethyl carbonate, ethyl acetate, n-propyl acetate, ethyl propionate, propyl propionate, dimethyl sulfoxide and other solvents. In addition, the organic solvent also contains electrolyte lithium salt, which may be LiPF₆, LiBF₄ and LiClO₄. The lithium source (anode electrode) may be lithium foil or lithium compounds, such as lithium carbonate, lithium oxide, lithium hydroxide, lithium cobaltate, lithium iron phosphate, lithium manganate, lithium vanadium phosphate, lithium nickelate, etc.

### (2) Liquid-phase doping method

Lithium metal, an electron transfer catalyst and the silicon oxide compound particles are added to an ether-based solvent, and continuously stirred and heated in a non-oxidizing atmosphere to maintain a constant-temperature reaction until lithium metal in the solution completely disappears. Under the action of the electron transfer catalyst, lithium metal can be dissolved in the ether-based solvent and form coordination compounds of lithium ions, which have low reduction potential, so they can react with silicon oxide compounds, and lithium ions enter the silicon oxide compound structure. The electron transfer catalyst may be biphenyl, naphthalene, etc. The ether-based solvent may be methyl butyl ether, ethylene glycol butyl ether, tetrahydrofuran, ethylene glycol dimethyl ether and the like. The temperature for constant-temperature reaction is 25-200°C. The non-oxidizing atmosphere is provided by at least one of nitrogen, argon, hydrogen or helium.

### (3) Thermal doping method

The silicon oxide compound particles are uniformly mixed with a lithium-containing compound, and then heat treatment is performed in a non-oxidizing atmosphere. The lithium-containing compound may be lithium hydroxide, lithium carbonate, lithium oxide, lithium peroxide, lithium hydride, lithium nitrate, lithium acetate, lithium oxalate and the like. Mixing is realized by any one of a high-speed disperser, a high-speed stirring mill, a ball mill, a conical mixer, a spiral mixer, a stirring mixer or a VC mixer. Equipment used for heat treatment is any one of a rotary furnace, a ladle furnace, a liner furnace, a roller kiln, a pushed slab kiln, an atmosphere box furnace or a tube furnace. The temperature for heat treatment is 400-850°C, preferably 550-800°C, and more preferably 550-750°C. The heat preservation time is 1-12 hours, preferably 2-12 hours, and more preferably 4-12 hours. The heating rate is greater than 0.1°C per minute and less than 10°C per minute, preferably 0.1-5°C per minute, and more preferably 0.1-3°C per minute. The non-oxidizing atmosphere is provided by at least one of nitrogen, argon, hydrogen or helium.

In the process of the above-mentioned heat treatment of lithium-doping reaction, the inventors of this application have found that the selection of heat treatment temperature, heat preservation time and heating rate has a vital influence on the crystal structure of the obtained anode active material and the uniformity of the internal micro-domain structure of particles, thus affecting the kinetic performance and cycling stability of the material. A higher heat treatment temperature leads to stronger crystallinity in the obtained anode active material, resulting in the formation of oversized Si phase and LiₓSiO_{y} phase. Consequently, the material exhibits poorer kinetic performance. The choice of heat preservation time and heating rate greatly affects the uniformity of internal crystal domains in this material. An overhigh heating rate can cause uneven heating of particles, leading to excessive growth of local grains. Conversely, a short heat preservation time can result in uneven lithium doping within particles, leading to lithium-enriched particle shells and lithium-depleted particle cores. This structure also results in the growth of local grains. Therefore, it is advantageous to choose the heat treatment temperature, heat preservation time, and heating rate within the given range mentioned above to obtain an anode active material with a uniform internal crystal domain structure, appropriate grain sizes, excellent kinetic performance, and high reversible capacity.

In some embodiments of the present application, the silicon-to-oxygen stoichiometric ratio in the silicon oxide compound particles can be 1:0.4-1:2, optionally 1:0.6-1:1.5, and more optionally 1:0.8-1:1.2. Additionally, there may be other trace impurity elements besides silicon and oxygen.

According to some embodiments, as shown in Fig. 2, before lithium is intercalated in Step S303, Step S302 may be performed, where the surfaces of the silicon oxide compound particles are coated with a carbon film layer.

By performing lithium intercalation in S303 after carbon film layer coating, the growth of silicon grains in the silicon oxide compound during heat treatment can be inhibited. Therefore, nano-scale monatomic silicon particles are uniformly dispersed and fixed in a lithium silicate compound or silicon oxide compound matrix, which can effectively inhibit the expansion of nano-silicon grains and prevent the silicon particles from gradually merging into larger particles during charging and discharging. This reduces the expansion deformation of batteries in the cycling process and mitigates the electrical failure of the silicon material, leading to minimal cycle expansion and improved cycling stability in lithium-ion secondary batteries using the material. In addition, conducting carbon film layer coating before lithium intercalation enables the production of a better-quality and more complete carbon film layer.

In some embodiments of the present application, the adopted silicon oxide compound may be a non-disproportionated silicon oxide compound or a silicon oxide compound subjected to disproportionation heat treatment. The temperature for disproportionation heat treatment may be 600-1100°C, preferably 700-1000°C, and more preferably 800-1000°C.

The carbon film layer can be directly obtained by chemical vapor deposition (CVD), and a carbon source used for CVD is hydrocarbon gas. The decomposition temperature of the hydrocarbon gas may be 600-1100°C, preferably 700-1000°C, and more preferably 800-1000°C.

The carbon film layer can also be obtained by first performing carbon reaction coating and then performing heat treatment carbonization in a non-oxidizing atmosphere. The carbon reaction coating can be realized by any one of a mechanical fusion machine, a VC mixer, a coating kettle, a spray dryer, a sand mill or a high-speed dispersion machine. A solvent adopted for coating is one or more of water, methanol, ethanol, isopropanol, N-butanol, ethylene glycol, ether, acetone, N-methylpyrrolidone, methyl butanone, tetrahydrofuran, benzene, toluene, xylene, N,N-dimethylformamide, N,N-dimethylacetamide and chloroform. A carbon reaction source may be one or more of coal tar pitch, petroleum pitch, polyvinyl alcohol, epoxy resin, polyacrylonitrile, polymethyl methacrylate, glucose, sucrose, polyacrylic acid and polyvinylpyrrolidone. Equipment used for heat treatment carbonization may be any one of a rotary furnace, a ladle furnace, a roller kiln, a pushed slab kiln, an atmosphere box furnace or a tube furnace. The temperature for heat treatment carbonization may be 600-1100°C, preferably 700-1000°C, and more preferably 800-1000°C. The heat preservation time may be 0.5-24 hours. The non-oxidizing atmosphere may be provided by at least one of nitrogen, argon, hydrogen or helium.

According to some embodiments, the silicon oxide compound particles may be completely or partially coated with a carbon film layer, or they may not be coated with a carbon film layer at all.

### [Characterization method of anode active material]

1. Material detection: Anode active materials prepared in each embodiment and each comparative example were characterized by the following equipment. The particle size distribution of the anode active materials was tested by BetterSize 2000 laser particle size analyzer produced by Dandong Bettersize Instruments. The composition and crystal structure of the anode materials were tested by Rigaku miniFlex600 powder X-ray diffractometer (XRD), with a 2θ angle range of 10°-60°, a scanning speed of 1°/min, a step size of 0.02°, and an X-ray source power of 600 W. The testing method of the full width at half maximum mentioned in this application is shown in Fig. 3. Jade software was used to remove the linear background between 10° and 60° from the X-ray diffraction pattern to be tested, then a corresponding diffraction peak was fitted, so that the fitted peak basically coincided with the tested pattern, and then the full width at half maximum of the fitted peak was read as the full width at half maximum of the corresponding diffraction peak. The testing of the peak area of the diffraction peak mentioned in this application was performed as stated above, using the peak area of the fitted peak as the peak area of the diffraction peaks. The surface morphology of the anode active materials was observed by Hitachi SU8010 scanning electron microscope (SEM).
2. Homogenization and electrode plate manufacturing: 14 parts of the anode active material, 81 parts of artificial graphite, 2.5 parts of conductive additive and 2.5 parts of binder were subjected to homogenization coating in an aqueous system, and then dried and rolled to obtain a negative electrode plate containing the anode active material of the application.
3. Evaluation of full cell: The negative electrode plates of the anode active materials prepared in each embodiment and each comparative example were cut, baked in vacuum, wound together with the paired positive electrode plates and separators, and put into an aluminum-plastic case of a corresponding size. A specific amount of electrolyte was injected and the cells were sealed after degassing, resulting in the formation of lithium-ion full cells with a capacity of roughly 3.2 Ah. The capacity, energy and constant current charge ratio of the full cell at 0.2C and 3C were tested by the battery tester produced by Shenzhen Neware Technology Limited.

The application will be further explained with specific embodiments.

### Embodiment 1-1

1,000 g of silicon oxide compound particles with a median particle size of 5 µm and a silicon-oxygen atomic ratio of 1:1 were prepared.

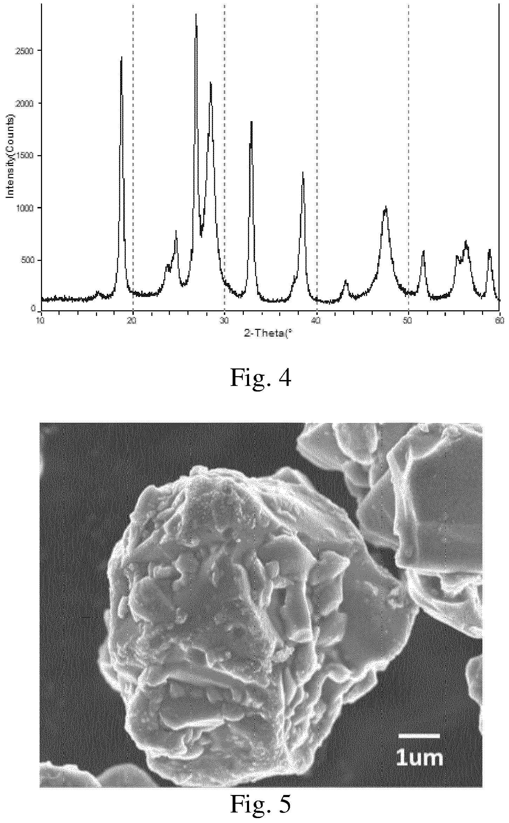

The silicon oxide compound powder, lithium metal foil, and biphenyl were added to a sealable glass container, followed by the addition of methyl butyl ether and stirring reaction in an argon atmosphere. After completion of the reaction and subsequent drying, the obtained powder was subjected to heat treatment in an argon atmosphere, with a heating rate of 5°C per minute, up to 850°C. The powder was then kept at this temperature for 2 hours before undergoing natural cooling, resulting in lithium-doped silicon oxide compound powder. The XRD pattern and SEM image of this material can be seen in Figs. 4 and 5.

The X-ray diffraction pattern obtained using Cu-K_{α} radiation exhibited a diffraction peak in the range of 2θ=18.78° ± 0.2°, corresponding to the Li2SiO₃ phase. The full width at half-maximum of the diffraction peak, set as A, was 0.34. The peak area of the diffraction peak was set as C. Moreover, within the range of 2θ=47.4°±0.3°, a diffraction peak corresponding to the Si(220) crystal plane was observed, with a full width at half-maximum set as B, and B/A=4. Additionally, the material displayed a diffraction peak within the range of 2θ=23.4°-25.2°, corresponding to Li₂Si₂O₅. A peak area of the Li₂Si₂O₅ diffraction peak was labeled as F. The sum of peak areas of all diffraction peaks in the range of 2θ=10°-60° (with the linear background area between 2θ=10° and 60° subtracted), was set as D, C/D=0.12, and F/C=0.4 (as shown in Table 1). No detectable diffraction peaks corresponding to the Li₄SiO₄ phase were observed in the range of 2θ=22°-23°, thus indicating an assumed peak area, set as E, of 0 for Li₄SiO₄.

14 parts of the anode active material, 81 parts of artificial graphite, 2.5 parts of conductive additive and 2.5 parts of binder were subjected to homogenization in an aqueous system. Some of the slurry samples were tested for water resistance and stability, while the rest were utilized for coating. After drying and rolling, a silicon-containing negative electrode plate was obtained.

In this embodiment, the evaluation results of full cells using the anode active material are as follows: the constant current charge ratio (CCCCR) at a 3C fast charge rate was 75.9%, the mass energy density at a 3C discharge rate was 261.5 Wh/kg, and the ratio of the energy density at a 3C discharge rate to that at a 0.2C discharge rate was 86.3%.

### Embodiment 1-2

1000 g of silicon oxide compound particles with a median particle size of 5 µm were weighed and placed in a CVD furnace. With acetylene as a carbon source, a coating reaction was conducted at 950°C, resulting in silicon oxide compound particles coated with a complete carbon film layer with a thickness of 20 nm.

Next, a thermal doping process was employed for lithium metal doping. Specifically, the aforementioned particles were mixed with a lithium-containing compound (e.g., lithium oxide, lithium hydride, lithium hydroxide, lithium carbonate, etc.), and the mixture was subjected to heat treatment in an argon atmosphere, with a heating rate of 3°C per minute, up to 800°C. The powder was then kept at this temperature for 3 hours before undergoing natural cooling, resulting in lithium-containing silicon oxide compounds coated with a carbon film.

As shown in Table 1 below, in this embodiment, A=0.43, B/A=4, C/D=0.12, F/C=0.4, and this material does not contain the diffraction peak of the Li₄SiO₄ phase.

In this embodiment, the evaluation results of full cells using the anode active material are as follows: the constant current charge ratio (CCCCR) at a 3C fast charge rate was 79.84%, the mass energy density at a 3C discharge rate was 268.9 Wh/kg, and the ratio of the energy density at a 3C discharge rate to that at a 0.2C discharge rate was 89.4%.

### Embodiments 1-3 to 1-16

The particle size of the silicon oxide compound was controlled at 5 µm. The surface of the silicon oxide compound was then coated with a carbon film layer with a thickness of 20 nm using the chemical vapor deposition or carbon reaction coating method mentioned before. Afterwards, lithium doping reaction was carried out using the electrochemical doping method, thermal doping method or liquid-phase doping method mentioned earlier. By adjusting parameters such as the carbonization temperature during the carbon film coating process, and lithium doping amount, heat treatment temperature, heat preservation time, and heating rate during the lithium doping reaction, the crystal structure and micro-domain uniformity of the material were modified to obtain anode active materials with different A values and B/A values.

The results are shown in Table 1 below. Embodiments 1-3 to 1-16 do not contain diffraction peaks of the Li₄SiO₄ phase. The 3C fast charge performance and 3C rate discharge performance of the materials prepared by these embodiments are shown in Table 1.

### Comparative example 1-1

1,000 g of silicon oxide compound particles with a median particle size of 5 µm and a silicon-oxygen atomic ratio of 1:1 were prepared. Then, a lithium doping reaction was performed using the liquid-phase doping method. The obtained powder was subjected to heat treatment in an argon atmosphere, with a heating rate of 15°C per minute, up to 900°C. The powder was then kept at this temperature for 2 hours before undergoing natural cooling, resulting in lithium-doped silicon oxide compound powder.

### Comparative example 1-2

1000 g of silicon oxide compound particles with a median particle size of 5 µm were weighed and placed in a CVD furnace. With acetylene as a carbon source, a coating reaction was conducted at 1200°C. Next, lithium metal doping was performed by the electrochemical method, resulting in lithium-containing silicon oxide compounds coated with a carbon film.

The material structure parameters (A value, B/A value, etc.), 3C fast charge performance and 3C rate discharge performance of Comparative examples 1-1 and 1-2 are shown in Table 1.

**Table 1**

| | Carb on coati ng | Partic le size | Thick ness of carbo n film | A | B/A | C/D | E/ D | F/C | CCC CR (%) at, 3C | 3C energ y densi ty (Wh/ kg) | 3C/0. 2C energ y densit y ratio (%) |
|---|---|---|---|---|---|---|---|---|---|---|---|
| Embodim ent 1-1 | No | 5µm | - | 0.34 | 4 | 0.12 | 0 | 0.4 | 75.9 | 261.5 | 86.3 |
| Embodim ent 1-2 | Yes | 5µm | 20nm | 0.43 | 4 | 0.12 | 0 | 0.4 | 79.84 | 268.9 | 89.4 |
| Embodim ent 1-3 | Yes | 5µm | 20nm | 0.55 | 4 | 0.12 | 0 | 0.4 | 83.25 | 280.2 | 94 |
| Embodim ent 1-4 | Yes | 5µm | 20nm | 0.8 | 3.5 | 0.12 | 0 | 0.4 | 84.23 | 284.0 | 95.7 |
| Embodim ent 1-5 | Yes | 5µm | 20nm | 1.3 | 1.8 | 0.12 | 0 | 0.4 | 84.68 | 280.5 | 95.1 |
| Embodim ent 1-6 | Yes | 5µm | 20nm | 1.3 | 1.5 | 0.12 | 0 | 0.4 | 80.79 | 267.9 | 89.9 |
| Embodim ent 1-7 | Yes | 5µm | 20nm | 1.3 | 1.3 | 0.12 | 0 | 0.4 | 77.32 | 260.5 | 87 |
| Embodim ent 1-8 | Yes | 5µm | 20nm | 1.1 | 6 | 0.12 | 0 | 0.4 | 85.23 | 284.5 | 96.6 |
| Embodim ent 1-9 | Yes | 5µm | 20nm | 1.2 | 10 | 0.12 | 0 | 0.4 | 85.46 | 281.2 | 96.4 |
| Embodim ent 1-10 | Yes | 5µm | 20nm | 1.3 | 15 | 0.12 | 0 | 0.4 | 85.74 | 277.6 | 96.4 |
| Embodim ent 1-11 | Yes | 5µm | 20nm | 1.8 | 12 | 0.12 | 0 | 0.4 | 85.88 | 276.9 | 96.9 |
| Embodim ent 1-12 | Yes | 5µm | 20nm | 1.2 | 20 | 0.12 | 0 | 0.4 | 79.36 | 264.9 | 91.9 |
| Embodim ent 1-13 | Yes | 5µm | 20nm | 1 | 30 | 0.12 | 0 | 0.4 | 75.19 | 256.5 | 87.3 |
| Embodim ent 1-14 | Yes | 5µm | 20nm | 2.5 | 8 | 0.12 | 0 | 0.4 | 81.38 | 266.6 | 93.6 |
| Embodim ent 1-15 | Yes | 5µm | 20nm | 3 | 7 | 0.12 | 0 | 0.4 | 80.25 | 265.5 | 93.7 |
| Embodim ent 1-16 | Yes | 5µm | 20nm | 4 | 5.8 | 0.12 | 0 | 0.4 | 77.45 | 252.1 | 87.9 |
| Comparat ive example 1-1 | No | 5µm | 20nm | 0.25 | 4 | 0.12 | 0 | 0.4 | 64.73 | 242.7 | 80.9 |
| Comparat ive example 1-2 | Yes | 5µm | 20nm | 0.8 | 1 | 0.12 | 0 | 0.4 | 65.94 | 243.8 | 81 |

Compared to the data from Embodiments 1-1 to 1-16, it can be observed that the energy density, fast charge performance, and rate discharge performance of Comparative example 1-1 are poorer. This is attributed to its A value of 0.25, indicating a larger grain size, which affects the kinetic performance of the material. Comparative example 1-2 also displays inferior energy density, fast charge performance, and rate discharge performance. Despite its A value being greater than 0.34, its B/A value is only 1, indicating compromised kinetic performance for the material.

The comparison of results from Embodiments 1-1 to 1-16 reveals that when the A value falls within the range of 0.55° to 2° and the B/A value falls within the range of 1.8 to 15, the material exhibits smaller grain size for the Li₂SiO₃ phase and Si phase. Additionally, the Li₂SiO₃ phase possesses a certain degree of crystallization to ensure material stability, while maintaining a relatively uniform micro-domain structure within the particles. The grain sizes of the Li₂SiO₃ phase and Si phase do not vary significantly. Consequently, this material shows minimal hindrance for solid-phase migration of lithium ions within the particles, resulting in excellent kinetic performance. Moreover, the structure contributes to the uniform stress release within the micro-domain of the particles, reducing particle fracturing caused by uneven stress distribution and thereby minimizing irreversible capacity loss. Consequently, the embodiments within this range exhibit optimal performance in terms of 3C rapid charge and 3C rate discharge, and higher energy density.

### Embodiments 2-1 to 2-6

The particle size of the silicon oxide compound was controlled at 5 µm. The surface of the silicon oxide compound was then coated with a carbon film layer with a thickness of 20 nm using the chemical vapor deposition or carbon reaction coating method mentioned before. Afterwards, lithium doping reaction was carried out using the electrochemical doping method, thermal doping method or liquid-phase doping method mentioned earlier. By adjusting parameters such as the lithium doping amount, heat treatment temperature, heat preservation time, and heating rate during the lithium doping reaction, anode active materials with different C/D values were obtained. See Table 2.

**Table 2**

| Embodiment | A | B/A | C/D | E/D | F/C | CCCCR (%) at 3C | 3C energy density (Wh/kg) | 3C/0.2C (%) |
|---|---|---|---|---|---|---|---|---|
| 2-1 | 0.8 | 3.5 | 0.12 | 0 | 0.4 | 84.23 | 284.0 | 95.7 |
| 2-2 | 0.8 | 3.5 | 0.03 | 0 | 0.4 | 82.34 | 266.9 | 94.8 |
| 2-3 | 0.8 | 3.5 | 0.05 | 0 | 0.4 | 83.72 | 277.0 | 95.3 |
| 2-4 | 0.8 | 3.5 | 0.15 | 0 | 0.4 | 84.44 | 285.2 | 95.7 |
| 2-5 | 0.8 | 3.5 | 0.2 | 0 | 0.4 | 83.91 | 287.3 | 95.3 |
| 2-6 | 0.8 | 3.5 | 0.01 | 0 | 0.4 | 81.68 | 255.4 | 93.1 |

From the data comparison of Embodiments 2-1 to 2-6, it can be seen that when the C/D value is too small (Embodiments 2-6), the energy density of batteries using this material will be affected to some extent. When the C/D value is between 0.05 and 0.2, superior 3C fast charge performance, 3C rate discharge performance and energy density are demonstrated.

### Embodiments 3-1 to 3-4

The particle size of the silicon oxide compound was controlled at 5 µm. The surface of the silicon oxide compound was then coated with a carbon film layer with a thickness of 20 nm using the chemical vapor deposition or carbon reaction coating method mentioned before. Afterwards, lithium doping reaction was carried out using the electrochemical doping method, thermal doping method or liquid-phase doping method mentioned earlier. By adjusting parameters such as the lithium doping amount, heat treatment temperature, heat preservation time, and heating rate during the lithium doping reaction, anode active materials with different E/D values were obtained. See Table 3.

**Table 3**

| Embodiment | A | B/A | C/D | E/D | F/C | CCCCR (%) at 3C | 3C energy density (Wh/kg) | 3C/0.2C (%) |
|---|---|---|---|---|---|---|---|---|
| 3-1 | 1.1 | 6 | 0.12 | 0 | 0.4 | 85.23 | 284.5 | 96.6 |
| 3-2 | 1.1 | 6 | 0.12 | 0.01 | 0.4 | 84.17 | 281.4 | 95.8 |
| 3-3 | 1.1 | 6 | 0.12 | 0.02 | 0.4 | 83.31 | 274.9 | 94.1 |
| 3-4 | 1.1 | 6 | 0.12 | 0.05 | 0.4 | 78.92 | 253.7 | 88.1 |

From the data comparison of Embodiments 3-1 to 3-4, it can be seen that when E/D is greater than 0.02, the energy density, fast charge performance and rate discharge performance of batteries using this material are affected to some extent. This is because a high proportion of Li₄SiO₄ phase tends to enhance the crystallinity of Si and leads to an uneven internal micro-domain structure.

### Embodiments 4-1 to 4-5

Similar to Embodiments 3-1 to 3-4, anode active materials with different F/C values were obtained by adjusting parameters such as the lithium doping amount, heat treatment temperature, heat preservation time and heating rate during lithium doping reaction, as shown in Table 4.

**Table 4**

| Embodiment | F/C | CCCCR (%) at 3C | 3C energy density (Wh/kg) | 3C/0.2C (%) |
|---|---|---|---|---|
| 4-1 | 0.4 | 83.72 | 277.0 | 95.3 |
| 4-2 | 1 | 83.48 | 273.3 | 95.2 |
| 4-3 | 3 | 82.55 | 267.6 | 94.8 |
| 4-4 | 6 | 81 | 262.4 | 94.1 |
| 4-5 | 10 | 79.49 | 257.2 | 93.2 |

From the data comparison of Embodiments 4-1 to 4-5, it can be seen that when F/C is greater than 6, the energy density, fast charge performance and rate discharge performance of batteries using this material are affected to some extent.

Obviously, the above embodiments are only examples for clearly explaining the present application, and are not intended to limit the implementations. For those of ordinary skill in the art, other changes or modifications in different forms can be made on the basis of the above description. It is not necessary and impossible to exhaust all the implementations here. However, obvious changes or modifications derived therefrom are still within the scope of protection of the present application.

## Claims

1. An anode active material for a battery, comprising anode active substance particles, wherein the anode active substance particles comprise silicon oxide compounds and lithium;
in an X-ray diffraction using Cu-K_{α} radiation, the anode active substance particles have a first diffraction peak in a range of 2θ=18.78°±0.2° and a second diffraction peak in a range of 2θ=47.4°±0.3°; and
a full width at half maximum of the first diffraction peak is set as A, A is greater than 0.34°, a full width at half maximum of the second diffraction peak is set as B, and B/A≥1.3.

2. The anode active material for a battery according to Claim 1, wherein 0.43°≤A≤3° and 1.5≤B/A≤20; preferably, 0.55°≤A≤2° and 1.8≤B/A≤15.

3. The anode active material for a battery according to Claim 1, wherein a peak area of the first diffraction peak is set as C, a sum of peak areas of all diffraction peaks of the anode active substance particles in a range of 2θ=10°-60° in the X-ray diffraction using Cu-K_{α} radiation is set as D, and C/D is≥0.03; preferably, 0.05≤C/D≤0.2.

4. The anode active material for a battery according to Claim 1, wherein in the X-ray diffraction using Cu-K_{α} radiation, the anode active substance particles have a third diffraction peak in a range of 2θ=22°-23°, a peak area of the third diffraction peak is set as E, a sum of peak areas of all diffraction peaks of the anode active substance particles in a range of 2θ=10°-60° in the X-ray diffraction using Cu-K_{α} radiation is set as D, and E/D≤0.02.

5. The anode active material for a battery according to Claim 1, wherein a peak area of the first diffraction peak is set as C, the anode active substance particles have a fourth diffraction peak in a range of 2θ=23.4°-25.2° in the X-ray diffraction using Cu-K_{α} radiation, a peak area of the fourth diffraction peak is set as F, and F/C≤6; preferably, F/C≤3; more preferably, F/C≤1.

6. The anode active material for a battery according to Claim 1, wherein the anode active substance particles further comprise nano-silicon grains, and a median particle size of the nano-silicon grains dispersed in the anode active substance particles is 0.1-35 nm, preferably 0.5-20 nm, and more preferably 1-15 nm.

7. The anode active material for a battery according to Claim 1, wherein content of silicon in the anode active substance particles is 30-80wt%, preferably 35-65wt%, and more preferably 40-65wt%.

8. The anode active material for a battery according to Claim 1, wherein the anode active substance particles further comprise a surface-located carbon film layer.

9. The anode active material for a battery according to Claim 8, wherein a thickness of the carbon film layer is 0.001-5 µm, preferably 0.005-2 µm, and more preferably 0.01-1 µm.

10. The anode active material for a battery according to Claim 8, wherein a mass of the carbon film layer accounts for 0.01-20wt%, preferably 0.1-15wt%, and more preferably 1-12wt% of a total mass of the anode active substance particles.

11. A method of preparing an anode active material for a battery, comprising:
preparing anode active substance particles, which comprises:
preparing silicon oxide compound particles; and
intercalating lithium into the silicon oxide compound particles;
wherein in an X-ray diffraction using Cu-K_{α} radiation, the anode active substance particles have a first diffraction peak in a range of 2θ=18.78°±0.2° and a second diffraction peak in a range of 2θ=47.4°±0.3°; and
a full width at half maximum of the first diffraction peak is set as A, A is greater than 0.34°, a full width at half maximum of the second diffraction peak is set as B, and B/A≥1.3.

12. The method according to Claim 11, wherein preparing the anode active substance particles further comprises: performing partial or complete carbon coating on surfaces of the silicon oxide compound particles.

13. The method according to Claim 12, wherein lithium is intercalated in the silicon oxide compound particles after the surfaces of the silicon oxide compound particles are partially or completely coated with carbon.

14. A battery anode, comprising:
the anode active material for a battery according to any one of Claims 1-10; or
an anode active material for a battery prepared by the method according to any one of Claims 11-13.

15. A secondary battery, comprising the battery anode according to Claim 14.
